# EUROPEAN PATENT APPLICATION

(11) **EP 2 538 173 A1**
(43) Date of publication of application: **26.12.2012**
(21) Application number: 11828507.1
(22) Date of filing: 24.03.2011
(51) Int. Cl.: G01C 3/06, G01B 11/00, G01S 7/48, G01S 17/48

(54) **METHOD FOR ARRANGING PHOTORECEIVING LENS, AND OPTICAL DISPLACEMENT SENSOR**

(30) Priority: 30.09.2010 JP 2010222239
(71) Applicant: Omron Corporation, Kyoto-shi, Kyoto 600-8530 (JP)
(72) Inventor: YAMAKAWA, Kenta, Kyoto 600-8530 (JP); ICHIYANAGI, Hoshibumi, Kyoto 600-8530 (JP)
(74) Representative: Horn Kleimann Waitzhofer
(86) International application number: PCT/JP2011/057143
(87) International publication number: WO 2012/042945

(57) **Abstract**

An optical displacement sensor (10) comprises a projection module (9); a light-receiving element (13) configured to receive light projected by the projection module (9) and reflected by an object to be measured (16); and a light-receiving lens (14) for imaging the reflected light onto the light-receiving element (13), the light-receiving lens being positioned between the object to be measured (16) and the light-receiving element (13). A position where the light is reflected by the object to be measured (16) is set so as to lie within a predetermined range (W₁) on an optical axis (L₁) of the projection module (9), between a first position (P_{N1}) closer to a light source (11) and a second position (P_{F1}) further away from the light source (11). The light-receiving lens (14) is arranged so that the angle of incidence (θ1) of reflected light incident on the light-receiving lens (14) from the first position (P_{N1}) and the angle of incidence (θ2) of reflected light incident on the light-receiving lens (14) from the second position (P_{F1}) are identical.

## Description

### TECHNICAL FIELD

The present invention relates to a method for arranging a light-receiving lens and an optical displacement sensor, and particularly relates to an optical displacement sensor for measuring the displacement of an object to be measured by using a triangulation principle, and a method for arranging a light-receiving lens used for the optical displacement sensor.

### BACKGROUND ART

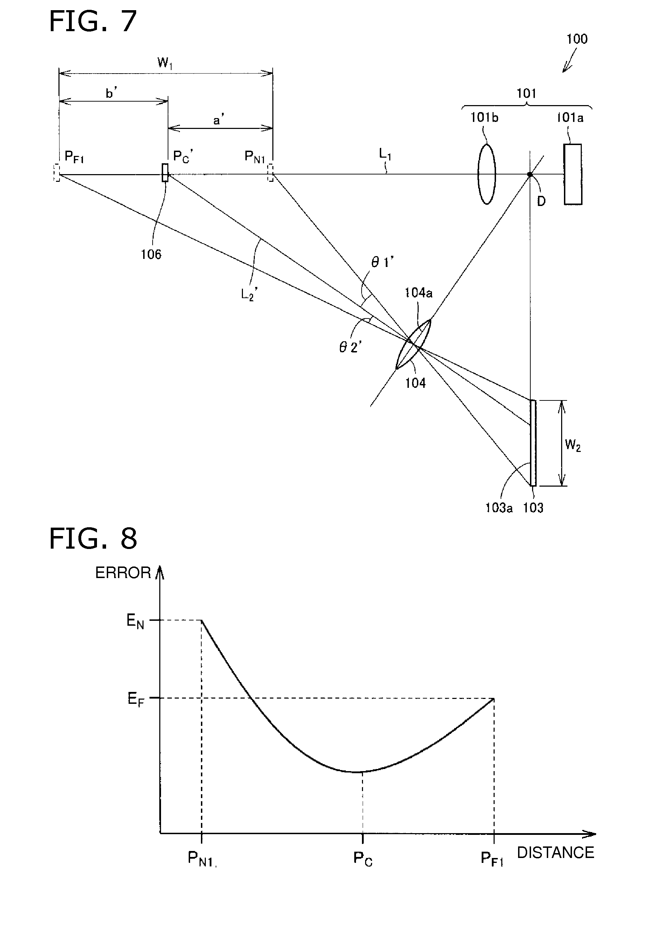

A conventional optical displacement sensor is disclosed in Japanese Laid-open Patent Publication No. 2008-145160 (Patent Citation 1), for example. FIG. 7 is a view showing the conventional optical displacement sensor 100 disclosed in Patent Citation 1. As shown in FIG. 7, the optical displacement sensor 100 is provided with a projection module 101 which includes a laser diode 101a serving as a light source radiating light to an object to be measured 106, and a projection lens 101b for collecting light from the laser diode 101a; a CCD 103 for receiving the reflected light on a light-receiving face 103a when the light from the projection module 101 is reflected by the object to be measured 106; and a light-receiving lens 104 for imaging the reflected light on the light-receiving face 103a of the CCD 103.

When light is radiated toward the object to be measured 106 from the laser diode 101a, the radiated light is reflected by the object to be measured 106, and the reflected light is received by the light-receiving face 103a of the CCD 103 via the light-receiving lens 104, and the optical displacement sensor 100 thereby measures the displacement of the object to be measured 106 on the basis of the position of an image formed by the received light.

The arrangement of the projection module 101, the CCD 103, and the light-receiving lens 104 is adjusted so that the Scheimpflug condition is met. Specifically, the light-receiving face 103a of the CCD 103 has a predetermined width W₂, and the reflection position of an object to be measured 106 in the range in which reflected light can be received by the light-receiving face 103a has a predetermined width W₁ on the optical axis of the projection module 101, i.e., the projection axis L₁. This predetermined width W₁ is the measurement range of the object to be measured 106 by the optical displacement sensor 100. The arrangement of the abovementioned components is adjusted so that lines extending from the reflection position in the predetermined width W₁, the light-receiving face 103a, and a principal face 104a of the light-receiving lens 104 intersect at a single point D, i.e., so that the Scheimpflug condition is met. By this adjustment, focus is achieved on the light-receiving face 103a during imaging, irrespective of the position at which the light is reflected in the predetermined width W₁. The light-receiving lens 104 is considered to be a thin lens in this description.

### CITATION LIST

### PATENT LITERATURE

(Patent Citation 1) Japanese Laid-open Patent Publication No.2008-145160

### SUMMARY OF INVENTION

### Technical Problem

In a conventional optical displacement sensor 100 such as the one disclosed in Patent Citation 1, the optical axis of the light-receiving lens 104, i.e., the light-receiving axis L₂', passing through the center of the light-receiving lens 104 is arranged so as to pass through the center of the predetermined width W₁ (measurement range). Specifically, this center is the intersection point Pc' at which the light-receiving axis L₂' and the projection axis L₁ intersect, and the distance a' from a first position P_{N1} closer to the laser diode 101a to the intersection point Pc' and the distance b' from a second position P_{F1} further away from the laser diode 101a are the same.

However, the angle of incidence (angle of view) θ1' of the reflected light from the first position P_{N1} and the angle of incidence (angle of view) θ2' of the reflected light from the second position P_{F1} are of different sizes in this arrangement. Specifically, the angle of view θ1' is larger than the angle of view θ2'. Therefore, when coma aberration occurs during imaging on the light-receiving face 103a, the effect of the coma aberration varies according to the difference in angle of view between the image formed by the reflected light from the first position P_{N1} and the image formed by the reflected light from the second position P_{F1}, and the condition of blur differs between these images. Specifically, the image formed by the reflected light from the first position P_{N1}, for which the angle of view is large, is more significantly affected by coma aberration. As a result, a deviation in the measurement precision of the optical displacement sensor 100 may occur according to the position of the object to be measured 106.

FIG. 8 is a graph showing the relationship between the distance from the laser diode 101a on the projection axis L₁ and the measurement error in the conventional optical displacement sensor 100. As shown in FIG. 8, the error E_{N} at the first position P_{N1} is greater than the error E_{F} at the second position P_{F1}.

A first object of the present invention is to provide a method for arranging a light-receiving lens in an optical displacement sensor so that a suitable measurement can be produced at any position in the measurement range.

A second object of the present invention is to provide an optical displacement sensor capable of producing a suitable measurement at any position in the measurement range. Solution to Problem

A method for arranging a light-receiving lens according to a first aspect of the present invention is a method for arranging a light-receiving lens used in an optical displacement sensor. The optical displacement sensor has a projection module configured to project light onto an object to be measured, and a light-receiving element configured to receive reflected light reflected by the object to be measured of light projected from the projection module. The light-receiving lens images the reflected light onto the light-receiving element, the light-receiving lens being positioned between the object to be measured and the light-receiving element. The projection module, the light-receiving element, and the light-receiving lens are arranged so that the Scheimpflug condition is met. A position where the light is reflected by the object to be measured is set so as to lie within a predetermined range on an optical axis of the projection module, between a first position closer to the projection module and a second position further away from the projection module, and the arrangement method arranges the light-receiving lens so that an angle of incidence of reflected light incident on the light-receiving lens from the first position and an angle of incidence of reflected light incident on the light-receiving lens from the second position are identical.

The angle of incidence of reflected light from the first position and the angle of incidence of reflected light from the second position can thereby be of the same size. Specifically, the angle of incidence of reflected light from the first position can be reduced. The image formed by the reflected light from the first position is then no longer significantly affected by coma aberration. The image formed by reflected light from the first position and the image formed by reflected light from the second position can also be imaged with the same precision. As a result, no deviation occurs in the performance of the optical displacement sensor according to the position of the object to be measured, and a suitable measurement can be produced at any position in the measurement range.

Preferably, the light-receiving lens has an aspheric lens. Spherical aberration can thereby be suppressed during imaging on the light-receiving element.

Preferably, the light-receiving lens is arranged so that the optical axis of the light-receiving lens is inclined at a predetermined angle with respect to a line connecting the center of the predetermined range and the center of the light-receiving lens.

An optical displacement sensor according to a second aspect of the present invention relates to an optical displacement sensor comprising a projection module configured to project light onto an measured object, a light-receiving element configured to receive light projected by the projection module and reflected by the object to be measured, and a light-receiving lens configured to image the reflected light onto the light-receiving element, the light-receiving lens being positioned between the object to be measured and the light-receiving element. A projection module, the light-receiving element, and the light-receiving lens are arranged so that the Scheimpflug condition is met; a position where light is reflected by the object to be measured lies within a predetermined range on the optical axis of the projection module, between a first position closer to the projection module and a second position further away from the projection module; and an angle of incidence of reflected light incident on the light-receiving lens from the first position and an angle of incidence of reflected light incident on the light-receiving lens from the second position are identical.

The angle of incidence of reflected light from the first position and the angle of incidence of reflected light from the second position can thereby be of the same size. Specifically, the angle of incidence of reflected light from the first position can be reduced. The image formed by the reflected light from the first position is then no longer significantly affected by coma aberration. The image formed by reflected light from the first position and the image formed by reflected light from the second position can also be imaged with the same precision. As a result, no deviation occurs in the performance of the optical displacement sensor according to the position of the object to be measured, and a suitable measurement can be produced at any position in the measurement range.

### <Advantageous Effects of Invention>

The method for arranging a light-receiving lens according to the present invention makes it possible to set the angle of incidence of reflected light from the first position and the angle of incidence of reflected light from the second position so as to be of the same size. Specifically, the angle of incidence of reflected light from the first position can be reduced. The image formed by the reflected light from the first position is then no longer significantly affected by coma aberration. The image formed by reflected light from the first position and the image formed by reflected light from the second position can also be imaged with the same precision. As a result, no deviation occurs in the performance of the optical displacement sensor according to the position of the object to be measured, and a suitable measurement can be produced at any position in the measurement range.

In the optical displacement sensor according to the present invention, the angle of incidence of reflected light from the first position and the angle of incidence of reflected light from the second position can be set so as to be of the same size. Specifically, the angle of incidence of reflected light from the first position can be reduced. The image formed by the reflected light from the first position is then no longer significantly affected by coma aberration. The image formed by reflected light from the first position and the image formed by reflected light from the second position can also be imaged with the same precision. As a result, no deviation occurs in the performance of the optical displacement sensor according to the position of the object to be measured, and a suitable measurement can be produced at any position in the measurement range.

### BRIEF DESCRIPTION OF THE DRAWINGS

FIG. 1 is a perspective view showing the outside of the optical displacement sensor.
FIG. 2 is a plan view from the direction of the arrow II in FIG. 1, showing a case in which the cover of the optical displacement sensor shown in FIG. 1 is removed.
FIG. 3 is a perspective view showing the projection lens.
FIG. 4 is a perspective view showing the light-receiving lens.
FIG. 5 is a schematic view showing the optical displacement sensor.
FIG. 6 is a graph showing the relationship between the distance from the light source on the projection axis and the measurement error of the optical displacement sensor.
FIG. 7 is a view showing a conventional optical displacement sensor.
FIG. 8 is a graph showing the relationship between the distance from the laser diode on the projection axis and the measurement error in the conventional optical displacement sensor.

### DESCRIPTION OF EMBODIMENTS

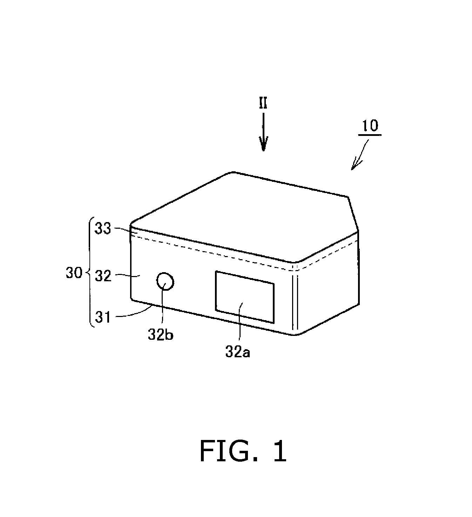

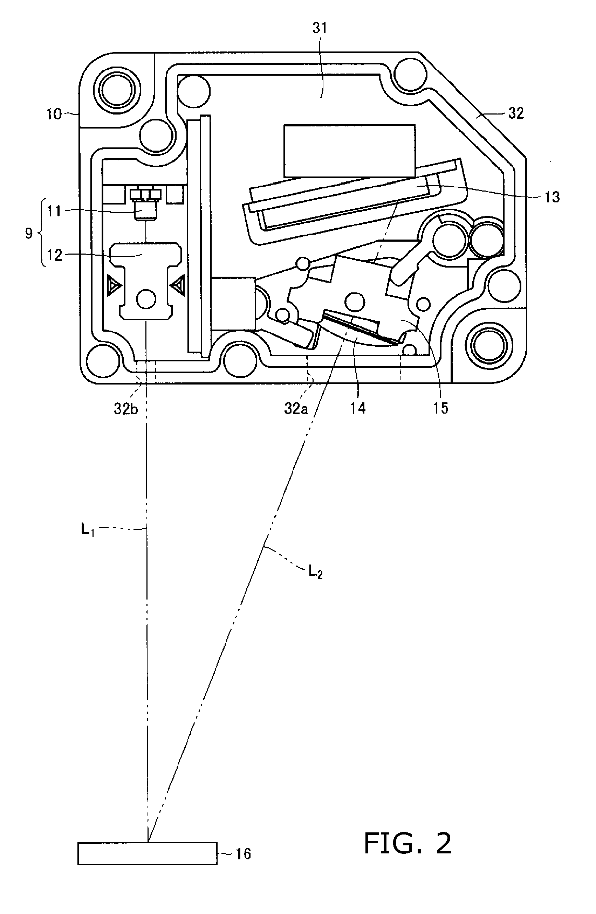

The optical displacement sensor according to an embodiment of the present invention will be described with reference to the drawings. FIG. 1 is a perspective view showing the outside of the optical displacement sensor 10. FIG. 2 is a plan view from the direction of the arrow II in FIG. 1, showing a case in which a cover 33 of the optical displacement sensor 10 shown in FIG. 1 is removed. In addition to the plan view of the optical displacement sensor 10, FIG. 2 also shows an object to be measured 16. As shown in FIGS. 1 and 2, the optical displacement sensor 10 measures the displacement of the object to be measured 16. In the optical displacement sensor 10, a projection module 9 for emitting light in a desired beam shape to the object to be measured 16, a light-receiving element 13 for receiving reflected light from the object to be measured 16, the reflected light being formed by light from the projection module 9, and a light-receiving lens 14 positioned between the object to be measured 16 and the light-receiving element 13 are provided inside a substantially rectangular housing 30. The projection module 9 includes a light source 11 for emitting light, and a projection lens 12 positioned between the object to be measured 16 and the light source 11. The projection module 9, the light-receiving element 13, and the light-receiving lens 14 constitute a predetermined optical system. The three-dot chain lines in FIG. 2 indicate the optical axis of the projection module 9, i.e., the projection axis L₁, along which the light rays emitted by the projection module 9 travel, and the optical axis, i.e., the light-receiving axis L₂, of the light-receiving lens 14 for receiving the reflected light from the object to be measured 16

The housing 30 has a bottom surface 31 disposed at the bottom on which the members constituting the optical system of the optical displacement sensor 10 are fixed, and openings 32a, 32b, and includes a side wall 32 disposed so as to surround the peripheral edge of the bottom surface 31, and a cover 33 disposed opposite the bottom surface 31. The bottom surface 31 is flat, and the light source 11 and other components are fixed thereon. The side wall 32 is configured so as to have a connecting part (not shown) to which a cable or the like can be connected. The opening 32a is provided opposite the light-receiving lens 14, and the opening 32b is provided opposite the projection lens 12.

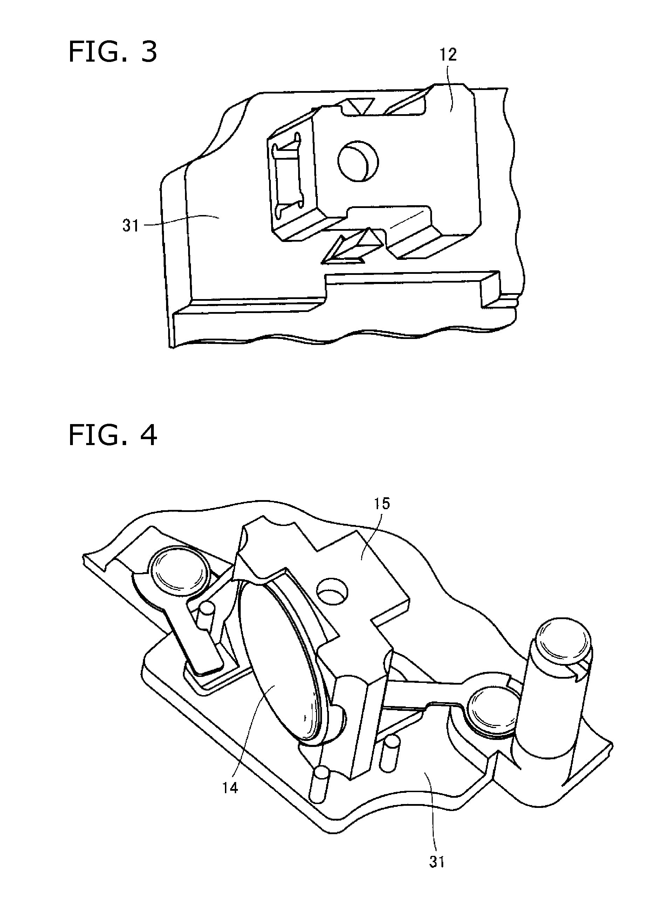

FIG. 3 is a perspective view showing the projection lens 12. FIG. 4 is a perspective view showing the light-receiving lens 14. As shown in FIGS. 1 through 4, the light source 11 is a laser diode which emits a laser beam to the object to be measured 16. The projection lens 12 includes a lens holder for accommodating a lens, and collects the light emitted from the light source 11 and adjusts the shape of the light from the light source 11 to form a predetermined shape. The light-receiving element 13 is a CMOS (Complementary Metal Oxide Semiconductor) sensor in which the reflected light from the object to be measured 16 is received on a light-receiving face. A plurality of light-receiving elements is arranged in a line on the light-receiving face. The light-receiving lens 14 is an aspherical surface lens, and is accommodated in a lens holder 15. The light-receiving lens 14 collects the reflected light from the object to be measured 16 and images the light on the light-receiving face. The light-receiving lens 14 is disposed so that the light-receiving axis L₂ passes through the center of the light-receiving lens 14, and the principal face of the light-receiving lens 14 is orthogonal to the light-receiving axis L₂.

In the optical displacement sensor 10, when a laser beam is emitted from the light source 11 of the projection module 9, the emitted light reaches the object to be measured 16 via the opening 32b of the side wall 32 and is reflected by the object to be measured 16. The reflected light from the object to be measured 16 is incident on the light-receiving lens 14 via the opening 32a of the side wall 32, and the light-receiving lens 14 images the reflected light on the light-receiving face. The position of the image received when the light is imaged is then detected. The optical displacement sensor 10 thereby measures the displacement of the object to be measured 16 in the direction of the projection axis L₁.

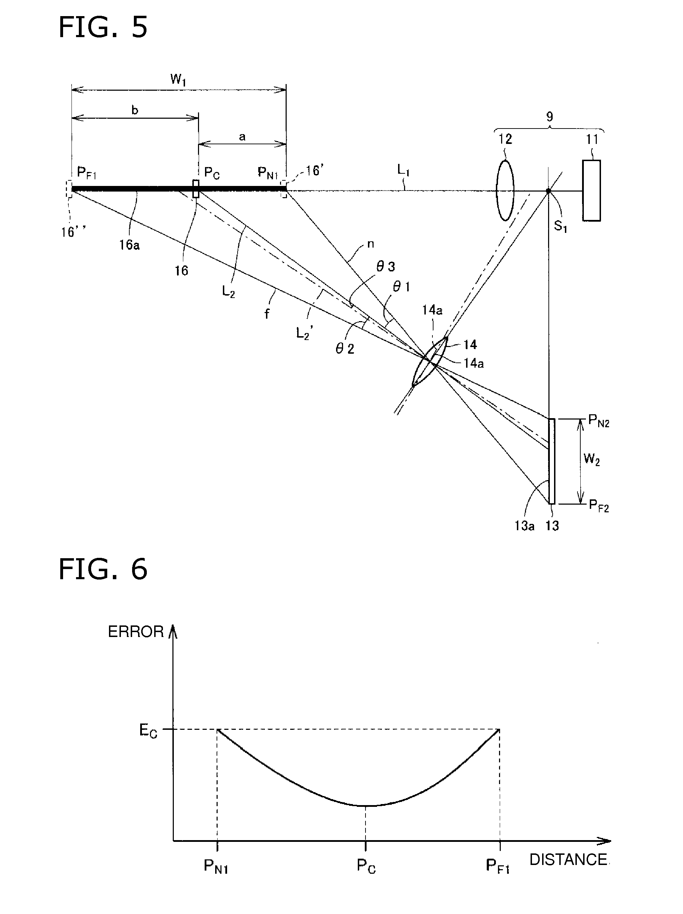

In this optical displacement sensor 10, the arrangement of the projection module 9, the light-receiving element 13, and the light-receiving lens 14 is adjusted so as to satisfy the Scheimpflug condition. FIG. 5 is a schematic view showing the optical displacement sensor 10. Specifically, the optical displacement sensor 10 has a predetermined measurement range W₁ in which the displacement of the object to be measured 16 can be measured, as shown in FIG. 5. This predetermined measurement range W₁ indicates the reflection position 16a of light reflected by the object to be measured 16, and is the range from a first position P_{N1} near the light source 11 of the projection module 9 on the projection axis L₁ to a second position P_{F1} distant from the light source 11 of the projection module 9. Specifically, the reflection position 16a of the light reflected by the object to be measured 16 has a width in the predetermined measurement range W₁ on the projection axis L₁. The object to be measured 16' at the first position P_{N1} and the object to be measured 16" at the second position P_{F1} are indicated by dotted lines in FIG. 5, and the reflection position 16a of light, which is the predetermined measurement range W₁, is indicated by a heavy line. The predetermined measurement range W₁ is 20 to 30 mm, for example. A light-receiving face 13a of the light-receiving element 13 has a predetermined width W₂, corresponding to the predetermined measurement range W₁, from a position P_{N2} near the light source 11 of the projection module 9 to a position P_{F2} distant from the light source 11 of the projection module 9.

The configuration of the optical displacement sensor 10 is adjusted so that a predetermined optical system satisfies the Scheimpflug condition, i.e., so that lines extending from the reflection position 16a (projection axis L₁) for the object to be measured 16, a principal face 14a of the light-receiving lens 14, and the light-receiving face 13a of the light-receiving element 13 intersect at a single point S₁. By this adjustment in the optical displacement sensor 10, focus is achieved on the light-receiving face 13a during imaging, irrespective of the position at which the light is reflected in the measurement range W₁. The optical displacement sensor 10 thus measures the displacement of the object to be measured 16 in the measurement range W₁.

Here, the light-receiving lens 14 is arranged so that the angle of incidence (angle of view) θ1 of the reflected light incident on the light-receiving lens 14 from the first position P_{N1}, and the angle of incidence (angle of view) θ2 of the reflected light incident on the light-receiving lens 14 from the second position P_{F1} are of the same size. The angle of incidence θ1 is the angle formed by the light-receiving axis L₂ and a light ray n incident from the first position P_{N1}, and the angle of incidence θ2 is the angle formed by the light-receiving axis L₂ and a light ray f incident from the second position P_{F1}. The intersection point P_{C} where the light-receiving axis L₂ and the projection axis L₁ intersect is within the predetermined measurement range W₁, and the distance a from the first position P_{N1} to the intersection point P_{C} and the distance b from the second position P_{F1} to the intersection point P_{C} are different.

Specifically, in the conventional technique, the distance a' from the first position P_{N1} to the intersection point P_{C}' and the distance b' from the second position P_{F1} to the intersection point P_{C}' are the same, as shown in FIG. 7. One-dot chain lines in FIG. 5 indicate the light-receiving axis L₂' and the line extending from the principal face 14a' of the light-receiving lens 14 in the conventional technique. Specifically, the angle of incidence θ1 in the embodiment of the present application is obtained by arranging the light-receiving lens 14 at a predetermined angle so as to reduce the angle of incidence θ1' of the conventional technique. The light-receiving lens 14 is arranged at a distance from the light source 11 so that the light-receiving axis L₂ is inclined at 0.5 to 2 degrees, for example, in relation to the light-receiving axis L₂'. As described above, the light-receiving axis L₂' is a line connecting the center P_{C}' of the measurement range W₁ and the center of the light-receiving lens 14, and the inclination angle θ3 formed with the light-receiving axis L₂ and the line L2' connecting the center P_{C}' of the measurement range W₁ and the center of the light-receiving lens 14 is 0.5 to 2 degrees, for example.

Here, for angles to be "the same" does not mean that there is absolutely no difference between the angles, but that a slight difference may also exist between the angles, for example, the angle of incidence θ1 may be 0.5 degrees, whereas the angle of incidence θ2 may be 0.6 degrees. Specifically, the meaning of "same angle" includes substantially equal angles. In other words, when the light-receiving lens 14 is inclined at 0.5 to 2 degrees, the angle of incidence θ1 and the angle of incidence θ2 are the same or substantially equal, and the light-receiving lens 14 is in the optimum arrangement. In the cases where there is a need to reduce the effect of aberrations other than coma aberration, such as spherical aberration, the optimum arrangement of the light-receiving lens 14 is achieved when the angles are substantially equal.

By arranging the light-receiving lens 14 in this manner, the angle of incidence θ1 of reflected light from the first position P_{N1} and the angle of incidence θ2 of reflected light from the second position P_{F1} can be set so as to be of the same size. Specifically, the angle of incidence θ1 of reflected light from the first position P_{N1} can be reduced relative to that of the conventional technique. The image formed by the reflected light from the first position P_{N1} is then no longer significantly affected by coma aberration. The image formed by reflected light from the first position P_{N1} and the image formed by reflected light from the second position P_{F1} can also be imaged with the same precision. As a result, no deviation occurs in the performance of the optical displacement sensor 100 according to the position of the object to be measured 16, and a suitable measurement can be produced at any position in the measurement range W₁.

In other words, the effect of coma aberration of the optical displacement sensor 10 can be uniformly balanced between the first position P_{N1} and the second position P_{F1}, and deviations in the measurement precision through the measurement range W₁ can be suppressed. FIG. 6 is a graph showing the relationship between the distance from the light source 11 on the projection axis L₁ and the measurement error of the optical displacement sensor 10. As shown in FIG. 6, the error EC is about the same at the first position P_{N1} and the second position P_{F1}. Consequently, no deviation occurs in the performance of the optical displacement sensor 10, and a suitable measurement can be produced at any position in the measurement range W₁.

In the optical displacement sensor 10 thus configured, the angle of incidence θ1 of reflected light from the first position P_{N1} and the angle of incidence θ2 of reflected light from the second position P_{F1} can be set so as to be of the same size. Specifically, the angle of incidence θ1 of reflected light from the first position P_{N1} can be reduced relative to that of the conventional technique. The image formed by the reflected light from the first position P_{N1} is then no longer significantly affected by coma aberration. The image formed by reflected light from the first position P_{N1} and the image formed by reflected light from the second position P_{F1} can also be imaged with the same precision. As a result, no deviation occurs in the performance of the optical displacement sensor 100 according to the position of the object to be measured 16, and a suitable measurement can be produced at any position in the measurement range W₁.

Since an aspherical lens is used as the light-receiving lens 14 in the optical displacement sensor 10, spherical aberration can also be suppressed during imaging on the light-receiving element 13.

The light-receiving element 13 is a CMOS sensor in the embodiment described above, but this configuration is not limiting, and the light-receiving element 13 may also be a CCD (Charge Coupled Device) sensor.

The light-receiving lens 14 is described as being an aspherical lens in the above embodiment, but this configuration is not limiting, and the light-receiving lens 14 may be formed by a combination of a plurality of lenses, for example.

An embodiment of the invention was described above with reference to the drawings, but the present invention is not limited to the embodiment shown in the drawings. Various revisions and/or modifications within a scope the same as or equivalent to that of the present invention may be made to the embodiment shown in the drawings

### INDUSTRIAL APPLICABILITY

The present invention can be effective for manufacturing an optical displacement sensor.

### REFERENCE SIGNS LIST

- 9: projection module
- 10: optical displacement sensor
- 11: light source
- 12: projection lens
- 13: light-receiving element
- 13 a: light-receiving face
- 14: light-receiving lens
- 14a: principal face
- 15: lens holder
- 16: measured obj ect
- 16a: reflection position
- 30: housing
- 31: bottom surface
- 32: side wall
- 32a, 32: bopenings
- 33: cover

## Claims

1. A method for arranging a light-receiving lens used in an optical displacement sensor,
the optical displacement sensor having a projection module configured to project light onto an measured object and a light-receiving element configured to receive reflected light reflected by the object to be measured of light projected from the projection module,
the light-receiving lens imaging the reflected light onto the light-receiving element and being positioned between the object to be measured and the light-receiving element,
the method comprising:
arranging the projection module, the light-receiving element, and the light-receiving lens so that the Scheimpflug condition is met;
setting a position where the light is reflected by the object to be measured so as to lie within a predetermined range on an optical axis of the projection module, between a first position closer to the projection module and a second position further away from the projection module; and
arranging the light-receiving lens so that an angle of incidence of reflected light incident on the light-receiving lens from the first position and an angle of incidence of reflected light incident on the light-receiving lens from the second position are identical.

2. The method for arranging the light-receiving lens according to claim 1, wherein
the light-receiving lens has an aspheric lens.

3. The method for arranging a light-receiving lens according to claim 1 or 2, wherein
arranging the light-receiving lens includes arranging the light-receiving lens so that the optical axis of the light-receiving lens is inclined at a predetermined angle with respect to a line connecting the center of the predetermined range and the center of the light-receiving lens.

4. An optical displacement sensor comprising:
a projection module configured to project light onto an object to be measured;
a light-receiving element configured to receive reflected light reflected by the object to be measured of light projected from the projection module; and
a light-receiving lens configured to image the reflected light onto the light-receiving element, the light-receiving lens being positioned between the object to be measured and the light-receiving element;
wherein
the projection module, the light-receiving element, and the light-receiving lens are arranged so that the Scheimpflug condition is met;
a position where light is reflected by the object to be measured lies within a predetermined range on the optical axis of the projection module, between a first position closer to the projection module and a second position further away from the projection module; and
an angle of incidence of reflected light incident on the light-receiving lens from the first position and an angle of incidence of reflected light incident on the light-receiving lens from the second position are identical.
